# EUROPÄISCHE PATENTSCHRIFT

(11) **EP 2 703 502 B1**
(45) Veröffentlichungstag und Bekanntmachung des Hinweises auf die Patenterteilung: **12.01.2022**
(21) Anmeldenummer: 13180853.7
(22) Anmeldetag: 19.08.2013
(51) Int. Cl.: C21D 9/36, C23C 22/62, C23C 22/82, F16C 33/64

(54) **Verfahren zur Behandlung eines Lagerbauteils aus Stahl**
Method for treating surface a bearing component made of steel
Procédé destiné au traitement d'un élément de palier en acier

(30) Priorität: 03.09.2012 DE 102012215591
(43) Veröffentlichungstag der Anmeldung: 05.03.2014
(73) Patentinhaber: Aktiebolaget SKF, 415 50 Göteborg (SE)
(72) Erfinder: von Schleinitz, Thilo, 97422 Schweinfurt (DE)
(74) Vertreter: Schonecke, Mitja

(56) Entgegenhaltungen:
- DE-A1-102007 048 750
- US-A1- 2003 205 298
- US-B1- 6 309 476

## Beschreibung

Die Erfindung betrifft ein Verfahren zur Behandlung eines Lagerbauteils aus Stahl.

Bei Wälzlagern wird in vielen Anwendungsfällen ein langer störungsfreier Betrieb und somit eine lange Lebensdauer der Wälzlager gefordert. Diese Forderung ist nicht immer leicht zu erfüllen. Insbesondere in Anwendungsfällen, in denen starke oder gar extreme Beanspruchungssituationen auftreten, ist es erforderlich, die Wälzlager mit herausragenden und auf die erwarteten Beanspruchungsprofile abgestimmten Werkstoffeigenschaften auszustatten.

Um diesbezüglich eine sehr weitgehende Optimierung zu erzielen, können nach der mechanischen Fertigstellung der Lagerbauteile Behandlungen durchgeführt werden, mit denen die Eigenschaften der Lagerbauteile verbessert werden. In diesem Zusammenhang ist es beispielsweise aus der DE102007061193A1 bekannt, ein Lagerbauteil einer Brünierbehandlung zu unterziehen. Ein mit der bekannten Brünierbehandlung behandeltes Lagerbauteil weist bereits sehr gute Eigenschaften auf. Bei einer weiteren Optimierung des Lagerbauteils ist es daher wünschenswert, an das durch die Brünierbehandlung Erreichte anzuknüpfen und das brünierte Lagerbauteil zu einer nochmaligen Verbesserung seiner Eigenschaften einer weiteren Behandlung zu unterziehen.

Aus der US6309476B1 ist ein Verfahren zur Ausbildung einer Hybridbeschichtung auf einem Eisenmetall-Substrat bekannt, bei dem auf dem Substrat eine intermediäre Beschichtung ausgebildet wird, die reich an molekularem Eisen und Sauerstoff ist und das beschichtete Substrat einer wässrigen Lösung mit oxidierenden Substanzen ausgesetzt wird, um eine Oberfläche auszubilden, die vorwiegend aus Magnetit, F3O4, besteht.

Es ist eine Aufgabe der Erfindung, eine Behandlung eines Lagerbauteils aus Stahl anzugeben, welche eine Brünierbehandlung des Lagerbauteils umfasst und mit der die Eigenschaften des Lagerbauteils mit der Zielsetzung einer höheren Lebensdauer noch weiter verbessert werden können.

Diese Aufgabe wird durch ein Verfahren zur Behandlung eines Lagerbauteils gemäß Anspruch 1 gelöst.

Beim erfindungsgemäßen Verfahren zur Behandlung eines Lagerbauteils wird das Lagerbauteil aus Stahl einer Brünierbehandlung unterzogen. Das brünierte Lagerbauteil wird einer thermischen Nachbehandlung unterzogen, bei der es während einer Haltezeit bei einer Haltetemperatur gelagert wird, wobei die Haltezeit wenigstens 30 Minuten beträgt und die Haltetemperatur oberhalb von 150 °C liegt. Das Lagerbauteil wird unmittelbar im Anschluss an die Brünierbehandlung bevor das Lagerbauteil auf eine Mindesttemperatur von 50 °C abgekühlt ist, mit einem flüssigen Schutzmedium, das bis zu einer Temperatur von wenigstens 200 °C beständig ist, benetzt und/oder der thermischen Nachbehandlung unterzogen.

Im Rahmen der Erfindung gilt der angegebene Bereich der Haltetemperatur als eingehalten, wenn die Haltetemperatur diesen Bereich lediglich kurzzeitig verlässt oder wenn die Haltezeit aus mehreren Teilperioden zusammengesetzt werden kann, innerhalb derer der angegebene Bereich der Haltetemperatur jeweils eingehalten wird.

Die Erfindung hat den Vorteil, dass die Eigenschaften des Lagerbauteils im Hinblick auf eine hohe Lebensdauer verbessert werden. Wenn die thermische Nachbehandlung durchgeführt wird, bevor das im Rahmen der Brünierbehandlung erwärmte Lagerbauteil auf die Mindesttemperatur abgekühlt ist, kann zum einen eine Korrosion des Lagerbauteils vermieden werden und zum anderen Energie für ein nochmaliges Aufheizen eingespart werden. Auch durch das Benetzen mit dem flüssigen Schutzmedium kann eine Korrosion des Lagerbauteils vermieden werden. Außerdem ist es von Vorteil, dass zwischen der Brünierbehandlung und der thermischen Nachbehandlung keine Konservierung des Lagerbauteils in Kombination mit einer nachfolgenden erneuten Abreinigung vom Konservierungsmittel erforderlich ist.

Die Haltetemperatur kann in einem Bereich zwischen 3 K und 100 K, insbesondere zwischen 3 K und 50 K unter der Anlasstemperatur des Lagerbauteils liegen. Besonders vorteilhaft ist eine Haltetemperatur, die maximal 15 K unter der Anlasstemperatur liegt. Dabei soll die Haltetemperatur die Anlasstemperatur allenfalls für eine sehr kurze Zeit erreichen oder gar überschreiten. Daraus ergibt sich bei vielen Anlagen eine Haltetemperatur von ca. 10 K unter der Anlasstemperatur als ein günstiger Wert. Insbesondere kann die Haltetemperatur wenigstens 190 °C, vorzugsweise wenigstens 200 °C betragen. Weiterhin kann die Haltetemperatur maximal 250 °C, insbesondere maximal 230 °C, vorzugsweise maximal 220 °C betragen.

Als flüssiges Schutzmedium kann ein Öl oder eine Emulsion eingesetzt werden. Insbesondere kann ein vollsynthetisches Öl eingesetzt werden.

Das Lagerbauteil kann im mit dem flüssigen Schutzmedium benetzten Zustand der thermischen Nachbehandlung unterzogen werden. Dabei kann ein flüssiges Schutzmedium verwendet werden, das bei der thermischen Nachbehandlung keine unerwünschten Rückstände auf der Oberfläche des Lagerbauteils erzeugt. Dies hat den Vorteil, dass ein zeitlich lückenloser Schutz der Oberfläche des Lagerbauteils möglich ist ohne ein Risiko einer Fleckenbildung einzugehen. Flecken können prinzipiell durch Antrocknen des Schutzmediums oder durch Antrocknen von Medien der Vorbehandlung entstehen. Ein dauerhaft geschlossener Film des Schutzmediums verhindert beides.

Bei einer Abwandlung des erfindungsgemäßen Verfahrens kann das Lagerbauteil vor dem Benetzen mit dem flüssigen Schutzmedium mit einem Dewatering Fluid behandelt werden. Auf diese Weise können Wasser-Rückstände zuverlässig entfernt werden.

Das Lagerbauteil kann zwischen der Brünierbehandlung und der thermischen Nachbehandlung bei einer Temperatur oberhalb der Mindesttemperatur getrocknet werden. Dadurch kann das Risiko einer Korrosion reduziert werden. Insbesondere kann das Lagerbauteil oberhalb einer Temperatur von 80 °C, vorzugsweise 90 °C, getrocknet werden. Das Lagerbauteil kann mittels Heißluft getrocknet werden.

Das Lagerbauteil kann zur Durchführung der thermischen Nachbehandlung einem Ofen zugeführt werden. Hierfür eignen sich beispielsweise ein Umluftofen oder ein Temperofen.

Ebenso besteht die Möglichkeit, dass das Lagerbauteil zur Durchführung der thermischen Nachbehandlung in ein Temperierungsbad eingetaucht wird. Mit einem Temperierungsbad lässt sich eine besonders gleichmäßige Temperaturverteilung erzielen, insbesondere wenn das Temperierungsbad kontinuierlich umgewälzt wird.

Das Temperierungsbad kann mit einem Badmedium angesetzt werden, das Polyglykol oder Polyglykolether enthält. Diese Stoffe zeichnen sich jeweils durch einen hohen Siedepunkt und einen hohen Flammpunkt aus. Generell können Badmedien zum Einsatz kommen, deren Siedepunkt bei oder oberhalb und deren Flammpunkt oberhalb der vorgesehenen Haltetemperatur der thermischen Nachbehandlung liegt.

Das Lagerbauteil kann vor dem Eintauchen in das Temperierungsbad in ein weiteres Bad eingetaucht werden, das ein dem Temperierungsbad entsprechendes Badmedium enthält. Das weitere Bad kann unbeheizt sein oder eine niedrigere Temperatur als das Temperierungsbad aufweisen. Die Verwendung des weiteren Bads hat den Vorteil, dass auf dem Lagerbauteil vorhandene Rückstände vor dem Eintauchen in das Temperierungsbad entfernt werden und somit eine Verunreinigung des Temperierungsbads vermieden oder zumindest reduziert wird.

Vor dem Eintauchen in das weitere Bad oder in das Temperierungsbad kann das Lagerbauteil mit einem Dewatering Fluid behandelt werden. Dadurch lassen sich etwaige Wasser-rückstände effizient entfernen und somit das Risiko einer Korrosion reduzieren.

Das Lagerbauteil kann nach dem Benetzen mit dem flüssigen Schutzmedium und vor der thermischen Nachbehandlung auf eine Temperatur unterhalb der Mindesttemperatur abgekühlt werden. Diese Vorgehensweise verschlechtert die gesamte Energiebilanz zwar etwas, bringt jedoch ohne eine nennenswerte Erhöhung des Risikos der Korrosion zusätzliche Freiheitsgrade in den Fertigungsprozess. Beispielsweise besteht die Möglichkeit, die thermische Nachbehandlung zu einer anderen Zeit und/oder an einem anderen Ort durchzuführen.

Das Lagerbauteil kann nach der thermischen Nachbehandlung mit einem Konservierungsmedium benetzt werden. Dies ergibt einen Korrosionsschutz. Insbesondere kann das Lagerbauteil mit dem Konservierungsmedium benetzt wird, bevor die Oberflächentemperatur des Lagerbauteils auf einen Wert unterhalb der Mindesttemperatur abgesunken ist. Dadurch wird ein besonders zuverlässiger Korrosionsschutz erzielt. Die Benetzung mit dem Konservierungsmedium kann durchgeführt werden, nachdem die Oberflächentemperatur des Lagerbauteils auf einen Wert unterhalb des Flammpunkts des Konservierungsmediums abgesunken ist. Dabei kann eine Restabkühlung im Konservierungsmedium erfolgen.

Das erfindungsgemäße Verfahren kann mittels einer kombinierten Brünier- Phosphatier-Anlage durchgeführt werden. Eine derartige Anlage enthält in der Regel einen Heißluft-Trockner, da dieser zur Trocknung von phosphatierten Werkstücken benötigt wird, die in der Regel eine poröse Oberfläche aufweisen. Weiterhin kann ein Umluftofen oder ein Heißluftofen, wie z. B. ein Lacktrocknungsofen zum Einsatz kommen.

Bei dem Lagerbauteil aus Stahl kann es sich insbesondere um einen Innenring, einen Außenring oder einen Wälzkörper eines Wälzlagers handeln.

Die Erfindung wird im Folgenden anhand der in den Figuren dargestellten Ausführungsbeispiele näher beschrieben.

Es zeigen:
- Figur 1: ein Flussdiagramm zur Veranschaulichung einer ersten Variante des erfindungsgemäßen Verfahrens zur Behandlung eines Lagerbauteils und
- Figur 2: ein Flussdiagramm zur Veranschaulichung einer zweiten Variante des erfindungsgemäßen Verfahrens.

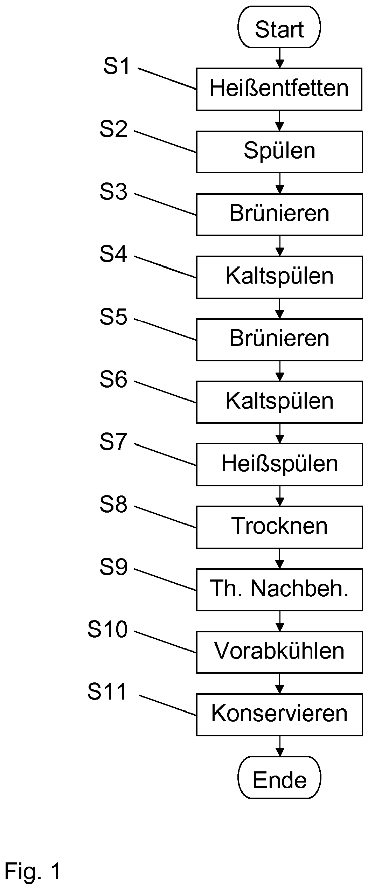

Figur 1 zeigt ein Flussdiagramm zur Veranschaulichung einer ersten Variante des erfindungsgemäßen Verfahrens zur Behandlung eines Lagerbauteils.

Bei dem Lagerbauteil kann es sich beispielsweise um einen Innenring oder einen Außenring eines Wälzlagers handeln. Weiterhin kann es sich bei dem Lagerbauteil um einen Wälzkörper handeln. Das Lagerbauteil ist erfindungsgemäß aus Stahl gefertigt, beispielsweise aus einem Stahl der Sorte 100Cr6, 100CrMo7, 100CrMo73 oder 100CrMo74. Die mechanische Bearbeitung wie beispielsweise Drehen, Schleifen, Honen usw. des Lagerbauteils ist bereits vor der Durchführung des erfindungsgemäßen Verfahrens abgeschlossen, so dass das erfindungsgemäße Verfahren mit dem Lagerbauteil in seiner endgültigen Form durchgeführt wird. Auch die übliche thermische Behandlung des Lagerbauteils wie beispielsweise Härten und Anlassen ist bereits abgeschlossen. Demgemäß weist das Lagerbauteil bereits seine endgültige Härte auf. Es kann lediglich zu einer - im Fall eines Wälzlagerbauteils nicht relevanten - geringen Maßveränderung des erfindungsgemäßen Bauteils kommen, die dessen Funktionsweise allerdings in de Regel nicht beeinträchtigt. Soweit nichts anderes angegeben, beziehen sich Temperaturangaben beim Lagerbauteil jeweils auf dessen Oberflächentemperatur. Für das erfindungsgemäße Verfahren ist nämlich nicht die Kerntemperatur, d. h. die Temperatur im Inneren des Lagerbauteils, sondern primär die Oberflächentemperatur des Lagerbauteils von Bedeutung. Abhängig vom Prozessablauf kann die Kerntemperatur des Lagerbauteils niedriger oder höher als die Oberflächentemperatur sein. Wird das Lagerbauteil im heißen Zustand in ein kaltes Bad eingetaucht, so wird die Oberflächentemperatur des Lagerbauteils nach dem Eintauchen zunächst niedriger sein als die Kerntemperatur, da sich das Lagerbauteil von seiner Oberfläche her abkühlt. Wird das Lagerbauteil im kalten Zustand in ein heißes Bad eingetaucht oder in einen heißen Ofen überführt, so wird die Oberflächentemperatur nach dem Eintauchen oder Überführen zunächst höher sein als die Kerntemperatur, da sich das Lagerbauteil von seiner Oberfläche her erwärmt.

Das in Figur 1 dargestellte Verfahren setzt sich aus einem für sich bekannten Brünierablauf (Schritte S1 bis S5) und einen sich daran anschließenden Prozessablauf mit gegenüber dem bekannten Brünierprozess modifizierten oder zusätzlichen Schritten S6 bis S11 zusammen. Der Brünierablauf gemäß den Schritten S1 bis S5 wird deshalb im Folgenden nur kurz skizziert und nicht detailliert beschrieben. Einzelheiten zum Brünierablauf gemäß den Schritten S1 bis S5 können z. B. in der DE102007061193A1 nachgeschlagen.

In Schritt 1 wird ein Heißentfetten des Lagerbauteils durchgeführt. Hierzu wird das Lagerbauteil in ein Entfettungsbad eingetaucht und verweilt dort mindestens 20 Minuten. Die Temperatur des Entfettungsbads kann beispielsweise 85 °C betragen. Das Heißentfetten kann mehrfach durchgeführt werden. An Schritt 1 schließt sich Schritt S2 an, in dem das Lagerbauteil kalt gespült wird. Das Spülen kann mehrfach durchgeführt werden. Auf Schritt S2 folgt Schritt S3, in dem eine erste Brünierung durchgeführt wird. Hierzu wird das Bauteil beispielsweise 15 Minuten in einem ersten Brünierbad gelagert, dessen Badmedium eine Temperatur von z. B. 141 °C aufweist. Danach wird das Lagerbauteil aus dem ersten Brünierbad entnommen und in Schritt S4 kalt gespült. Es folgt dann Schritt S5, in dem das Lagerbauteil für eine zweite Brünierung in ein zweites Brünierbad eingetaucht wird, dessen Badmedium beispielsweise eine Temperatur von 148 °C aufweist. Das Lagerbauteil wird beispielsweise 15 bis 20 Minuten im zweiten Brünierbad gelagert und dann aus dem zweiten Brünierbad entnommen. Schritt S5 ist der letzte Schritt des bekannten Brünierablaufs. Die im Folgenden beschriebenen weiteren Schritte sind entweder gegenüber den bekannten Brünierablauf modifiziert oder neu hinzugefügt.

An Schritt S5 schließt sich Schritt S6 an, in dem das Lagerbauteil kalt gespült wird. Hierzu wird das Lagerbauteil nacheinander in beispielsweise vier Kaltspülen eingetaucht und im Gegensatz zum bekannten Brünierablauf ohne Verweilzeit gleich wieder entnommen. Durch die kurzen Eintauchzeiten in das jeweilige Badmedium, das sich auf Raumtemperatur befindet, soll die Abkühlung des Lagerbauteils möglichst gering gehalten werden. Eine Abkühlung findet primär in der Nähe der Oberfläche des Lagerbauteils statt. Die Kerntemperatur, d. h. die Temperatur im Inneren des Lagerbauteils wird weitgehend beibehalten. Beim bekannten Brünierablauf erfolgt dagegen eine weitgehende Absenkung der Kerntemperatur des Lagerbauteils. Auf die Spülwirkung haben die kurzen Eintauchzeiten keinen nennenswerten Einfluss, da die Spülwirkung hauptsächlich durch das Umströmen beim Ein- und Auftauchen des Lagerbauteils erfolgt und somit ein stationäres Verweilen entbehrlich ist, wenn keine Temperaturveränderung beabsichtigt ist. Lediglich bei der ersten Kaltspüle kann ein kurzes Verweilen des Lagerbauteils vorgesehen werden, um die Oberflächentemperatur des Lagerbauteils so weit zu reduzieren, dass beim Ausheben des Lagerbauteils aus der ersten Kaltspüle hitzebedingte Antrocknungen vermieden werden. Die weiteren Spülschritte halten die Oberflächentemperatur unter der Antrocknungsgrenze ohne die Kerntemperatur wesentlich abzusenken. Als Antrocknungsgrenze kann die Siede- bzw. Verdampfungstemperatur des Spülmediums angesehen werden, d. h. bei Wasser unter Normalbedingungen 100 °C, bei Verunreinigung des Wassers durch abgespülte Rückstände eventuell mehr als 100 °C. Allerdings wird auch bei der ersten Kaltspüle die Verweildauer nur so lange gewählt, wie dies zur Erreichung dieses Effekts erforderlich ist. Als Badmedium ist jeweils Wasser vorgesehen, das vollständig oder teilweise demineralisiert sein kann. Bei der letzen Kaltspüle ist eine Filtereinrichtung vorgesehen, die Schwebstoffe aus dem Badmedium filtert.

Nach dem Kaltspülen wird das immer noch relativ heiße Lagerbauteil im Schritt S7 mehrfach in eine Heißspüle eingetaucht, so dass sich insgesamt eine Spülzeit von beispielsweise 1 Minute ergibt. Bei dem Badmedium der Heißspüle kann es sich um demineralisiertes Wasser handeln, das ca. 0,3 Massen% Nitrit oder Hydroxid und zudem anionische Netzmittel enthält. Abhängig von der verwendeten Brünieranlage und dem Brünierverfahren kann sich eine derartige Konzentration an Nitrit oder Hydroxid durch eine Verschleppung aus dem vorausgehenden Brünierungsprozess einstellen. Sollte dies nicht der Fall sein, kann eine Zugabe der genannten Stoffe erfolgen. Das Nitrit oder Hydroxid hat einen passivierenden Effekt und ermöglicht eine längere Verweildauer des Lagerbauteils in der Heißspüle ohne Korrosionsgefahr. Die Temperatur des Badmediums der Heißspüle kann beispielsweise 80 °C oder sogar 90 °C oder noch höher sein.

Auf Schritt S7 folgt Schritt S8, in dem das Lagerbauteil mittels Heißluft beispielsweise 5 Minuten lang getrocknet wird. Die Temperatur des Heißluftstroms kann beispielsweise 100 °C oder mehr betragen. Durch die heiße Luft wird das am Lagerbauteil verbliebene Wasser der Heißspüle rasch abgetrocknet, wobei die Kernwärme des Lagerbauteils den Trocknungsprozess unterstützt. Das in der Heißspüle vorhandene Nitrit oder Hydroxid ergibt in der genannten Konzentration keine sichtbaren Rückstände auf der Oberfläche des Lagerbauteils. Eine Korrosionsgefahr besteht angesichts der hohen Temperaturen und der schnellen Trocknung nicht. Falls die Behandlung des Lagerbauteils in einer kombinierten Brünier- Phosphatier-Anlage durchgeführt wird, kann das Lagerbauteil zur Heißlufttrocknung einem Chargentrockner zugeführt werden.

Anschließend an Schritt S8 wird das Lagerbauteil in einem Schritt S9 einer thermischen Nachbehandlung in einem Umluftofen zugeführt. Dabei ist es wichtig, dass sowohl die Oberflächentemperatur als auch die Kerntemperatur des Lagerbauteils bis zum Einbringen in den Umluftofen nicht allzu stark absinkt, um den Energieeinsatz für das Aufheizen des Lagerbauteils im Umluftofen in Grenzen zu halten und kein Risiko einer Korrosion einzugehen. Diese Bedingung kann als erfüllt angesehen werden, wenn die Oberflächentemperatur des Lagerbauteils auf dem Weg vom Heißlufttrockner zum Umluftofen nicht unter 50 °C, vorzugsweise nicht unter 60 °C absinkt. Angestrebt wird eine Temperatur von ca. 100 °C entsprechend der Temperatur des Chargentrockners.

Im Umluftofen wird das Lagerbauteil, dessen Anlasstemperatur beispielsweise 210 °C beträgt, auf eine Haltetemperatur von beispielsweise 203 ± 3 °C erwärmt. Dies gilt zunächst für die Oberflächentemperatur und nach einer gewissen Verweildauer des Lagerbauteils im Umluftofen auch für die Kerntemperatur, wobei allerdings primär die Oberflächentemperatur von Bedeutung ist, da der Prozess auf die Oberfläche abzielt. Die Haltezeit im Umluftofen kann beispielsweise 120 Minuten betragen. Die zu wählende Haltetemperatur hängt von der Stahlsorte des Lagerbauteils, insbesondere von dessen Anlasstemperatur ab. Mitunter ist eine Reduzierung der Haltezeit auf 60 Minuten möglich. Als Sollwert für die Haltetemperatur wird eine Temperatur unterhalb der Anlasstemperatur gewählt, die zum einen der Anlasstemperatur möglichst nahe kommen sollte, für die aber zum anderen unter den gegebenen anlagetechnischen Voraussetzungen ein Überschreiten der Anlasstemperatur zuverlässig vermieden oder zumindest zuverlässig auf eine tolerierbare Maximalzeit begrenzt werden kann. Dies ergibt in vielen Fällen eine Haltetemperatur, die maximal 15 K unter der Anlasstemperatur liegt, so dass sich gute Ergebnisse erzielen lassen, wenn eine Haltetemperatur von ca. 10 K unter der Anlasstemperatur angestrebt wird. Erfindungsgemäß muss die Haltetemperatur jedenfalls oberhalb von 150 °C liegen. Bei vielen Stahlsorten liegt die Haltetemperatur im Bereich von 200 °C bis 230 °C, teilweise auch bis 250 °C. Je höher die Haltetemperatur unter den gegebenen Umständen gewählt werden kann, desto kürzer ist die benötigte Haltezeit. Des Weiteren hängt die Haltezeit auch von der Geometrie, insbesondere der Materialstärke, des Lagerbauteils ab. Ein Lagerbauteil, das eine hohe Materialstärke aufweist, benötigt in der Regel eine längere Zeit für das Aufheizen auf die Haltetemperatur als ein Lagerbauteil, das eine geringe Materialstärke aufweist.

Durch die Lagerung des Lagerbauteils knapp unterhalb der Anlasstemperatur wird das Gefüge im Bereich der durch die Brünierbehandlung ausgebildeten Oxidschicht und in der sich daran anschließenden Randzone stabilisiert und dadurch die Lebensdauer erhöht. Es erfolgt aber kein Anlassen und eine damit verbundene Reduzierung der Härte des Lagerbauteils. Ebenso wenig wird die Härte des Lagerbauteils durch die thermische Nachbehandlung erhöht.

Anstelle des Umluftofens kann zur Lagerung des Lagerbauteils in Schritt S9 auch ein Temperofen oder eine sonstige Heizeinrichtung verwendet werden. Eine Schutzgasathmosphäre ist nicht erforderlich.

Weiterhin ist es möglich, den Schritt S9 so abzuwandeln, dass die thermische Nachbehandlung mittels eines Temperierungsbads durchgeführt wird. Hierzu wird das Lagerbauteil vollflächig in das Temperierungsbad eingetaucht und während einer Haltezeit auf einer Haltetemperatur gehalten, Für die Haltezeit und die Haltetemperatur können die gleichen Werte zum Ansatz kommen wie bei der Variante mit dem Umluftofen. Um eine möglichst homogene Temperaturverteilung zu erreichen, kann das Temperierungsbad kontinuierlich umgewälzt werden. Die Temperatur des Temperierungsbads kann durch ein Heizsystem mit hoher Präzision konstant gehalten oder gemäß einem gewünschten Temperaturprofil variiert werden. Für das Temperierungsbad wird ein Badmedium gewählt, dass bei der vorgesehenen Temperatur ausreichend chemisch stabil ist und insbesondere nicht rasch altert und nicht oxidiert. Außerdem erfolgt die Auswahl des Badmediums derart, dass das brünierte Lagerbauteil nicht vom Badmedium angegriffen wird.

Als Badmedium des Temperierungsbads eignet sich beispielsweise ein vollsynthetisches Hochtemperatur-Polyglykol, insbesondere Polyalkylenglykol (PAG). Der Flammpunkt eines derartigen Polyglykols liegt bei ca. 240 °C, so dass Haltetemperaturen bis in diesen Bereich möglich sind. Beispielsweise sind vollsynthetische Hochtemperatur-Industriegetriebeöle auf PAG-Basis verfügbar. Mit Einschränkungen kann auch Polyethylenglykol (PEG) zum Einsatz kommen, insbesondere in Kombination mit starken Antioxidantien. Bei sehr hohen Temperaturen kann es hier allerdings Probleme geben.

Ebenso kann ein Polyglykolether (Ethoxylat R-(O-C2H4)n-OH) zum Einsatz kommen. In diesem Fall beträgt der Flammpunkt ca. 290 °C, so dass nochmals höhere Haltetemperaturen, beispielsweise bis 260° C oder auch darüber, möglich sind.

Generell kann für das Temperierungsbad eine Vielzahl von Stoffen zum Einsatz kommen, die üblicher Weise als Schmierstoffe oder als Wärmeträgerflüssigkeiten für den drucklosen Betrieb eingesetzt werden.

Prinzipiell eignen sich als Badmedien Mineralöle, Kohlenwasserstoffe, Syntheseöle, biologische Öle und Fette, Ester, Polyalphaolefine, Polyglykole, Polyglykolether, Diphenyle (Diphenyl, Diphenylether, Diphenyloxid), Terphenyle (Terphenyl, Terphenylen) und soweit dies die Arbeitsumgebung zulässt Silikonöle.

Um unerwünschte Oxidation zu vermeiden, kann das Temperierungsbad mit einem Schutzgasfilm belegt werden. Das Schutzgas soll nach Möglichkeit schwerer als Luft sein, so dass der Schutzgasfilm mit geringem Aufwand durch Fluten eines Bereichs des Behälters oberhalb des Badmediums mit Schutzgas ausgebildet werden kann. Durch eine kontinuierliche Zufuhr einer geringen Menge Schutzgas wird der Schutzgasfilm dauerhaft aufrechterhalten. Als Schutzgas eignet sich beispielsweise Stickstoff.

Für das Temperierungsbad kann ein abdeckbarer Behälter vorgesehen sein, um den Austrag des Badmediums in die Umgebung möglichst gering zu halten. Außerdem verringert ein abdeckbarer Behälter die Wärmeabgabe des Badmediums und den Zutritt von Luftsauerstoff und ist insbesondere auch beim Einsatz von Schutzgas vorteilhaft.

Vor dem Eintauchen des Lagerbauteils in das Temperierungsbad kann das Lagerbauteil in ein weiteres Bad eingetaucht werden, welches das gleiche Badmedium wie das Temperierungsbad aufweist. Dieses weitere Bad ist allerdings unbeheizt und dient primär dazu, auf dem Lagerbauteil vorhandene Rückstände zu entfernen und die Oberfläche des Lagerbauteils mit dem Badmedium zu benetzen. Bei den Rückständen kann es sich beispielsweise um Stoffe aus vorhergehenden Behandlungsbädern handeln. Diese Stoffe können dann besonders leicht aus dem weiteren Bad abgetrennt werden, wenn sie mit dem Badmedium des weiteren Bads nicht mischbar sind.

Falls die thermische Nachbehandlung im Schritt S9 mit dem Temperierungsbad durchgeführt wird, ist eine vorherige Trocknung des Lagerbauteils nicht erforderlich. Somit kann Schritt S8 beispielsweise dahingehend abgewandelt werden, dass keine Trocknung mittels Heißluft durchgeführt wird, sondern das Lagerbauteil stattdessen in ein Bad mit einem Dewatering Fluid getaucht wird, um Wasserreste, die dem Bauteil nach Passieren der Heißspüle anhaften, zu entfernen. Die Verweildauer im Dewatering Fluid beträgt weniger als 1 Minute, um eine allzu große Abkühlung des Lagerbauteils zu vermeiden. Das Dewatering Fluid befindet sich auf Raumtemperatur und ist somit kalt. Das mit dem Dewatering Fluid benetzte Lagerbauteil wird anschließend in das unbeheizte Bad, welches das gleiche Badmedium wie das Temperierungsbad enthält, eingetaucht. Da sich das Dewatering Fluid nicht mit diesem Badmedium mischt, kann das in das Bad eingetragene Dewatering Fluid mit geringem Aufwand entfernt werden. Danach wird das Lagerbauteil aus dem Bad entnommen und in das Temperierungsbad eingetaucht. Das Temperierungsbad kann die gleiche Zusammensetzung aufweisen wie vorstehend beschrieben und es können die gleichen Behandlungsparameter beispielsweise bzgl. Temperatur und Verweildauer zur Anwendung kommen.

Im Anschluss an Schritt S9 wird das Lagerbauteil in Schritt S10 aus dem Umluftofen oder dem Temperierungsbad entnommen und beispielsweise an Luft gelagert, bis sich die Oberfläche des Lagerbauteils auf eine vorgegebene Temperatur abgekühlt hat. Diese Temperatur kann beispielsweise 80 °C betragen und wird so gewählt, dass sie deutlich über der Raumtemperatur, insbesondere über 60 °C, liegt. Der maximal zulässige Wert für diese Temperatur hängt von dem danach ausgeführten Schritt S11 ab.

In Schritt S11 wird das Lagerbauteil konserviert und abgekühlt. Hierzu wird das Lagerbauteil in ein Konservierungsbad getaucht. Bei dem Badmedium handelt es sich beispielsweise um ein Konservieröl, insbesondere um ein nephtonisches und paraffinisches Konservieröl mit Sulfonaten. Durch das Eintauchen in das Konservierungsbad wird das Lagerbauteil vollflächig mit dem Konservieröl benetzt und dadurch vor Korrosion geschützt. Da Konservieröle oder ähnliche Konserviermedien einen vergleichsweise niedrigen Flammpunkt aufweisen, ist beim Eintauchen des Lagerbauteils in das Konservierungsbad darauf zu achten, dass die Oberflächentemperatur des Lagerbauteils unterhalb des Flammpunktes des Konserviermediums liegt. Demgemäß ist in Schritt S10 eine Abkühlung der Oberfläche des Lagerbauteils auf eine Temperatur unterhalb des Flammpunktes des Konserviermediums abzuwarten.

Mit der Durchführung des Schrittes S11 ist der Durchlauf des Flussdiagramms abgeschlossen.

Das in Figur 1 dargestellte Verfahren kann beispielsweise mittels einer kombinierten Brünier- Phosphatier-Anlage durchgeführt werden. Diese Anlagenvariante besitzt in einer langen Reihe sowohl alle Behälter zum Brünieren als auch zum Phosphatieren mit einem einzigen gemeinsamen Warenträgertransport, so dass sie je nach Auftragslage als Brünieroder als Phosphatier-Anlage gefahren werden kann. Die nicht benötigten Behälter werden je nach Programm dann einfach übergangen. Eine solche kombinierten Brünier- Phosphatier-Anlage enthält für den Phosphatierbereich in der Regel einen Heißluft-Trockner, weil der porösen schwammartigen Phosphatschicht die Wasseranteile über Hitze entzogen werden müssen.

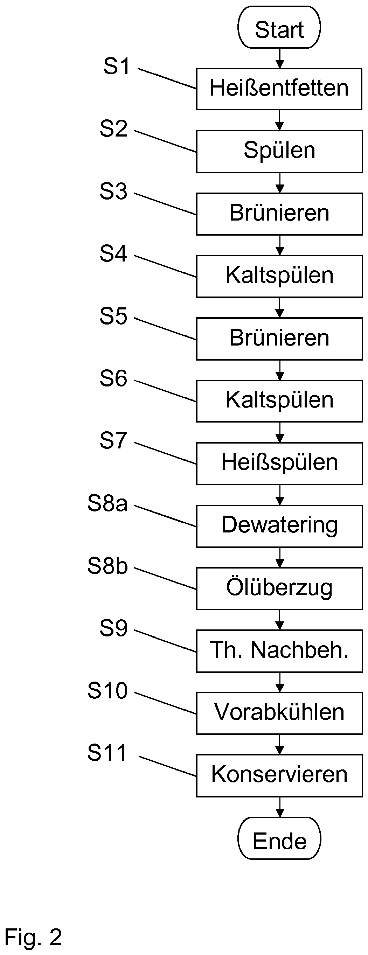

Figur 2 zeigt ein Flussdiagramm zur Veranschaulichung einer zweiten Variante des erfindungsgemäßen Verfahrens.

Für die Schritte, die mit der ersten Variante des erfindungsgemäßen Verfahrens übereinstimmen, wurden in Figur 2 dieselben Bezugszeichen verwendet wie in Figur 1.

Wie aus Figur 2 hervorgeht sind die Schritte S1 bis S7 und S9 bis S11 der ersten Variante des erfindungsgemäßen Verfahrens ebenfalls bei der zweiten Variante vorgesehen. Diese übereinstimmenden Schritte werden im Folgenden nicht nochmals erläutert. Ein Unterschied zwischen den beiden Varianten besteht hinsichtlich des Schrittes S8, der lediglich bei der ersten Variante, nicht jedoch bei der zweiten Variante des erfindungsgemäßen Verfahrens vorgesehen ist. Bei der zweiten Variante sind stattdessen die Schritte S8a und S8b vorgesehen.

Im Schritt S8a, der im Anschluss an Schritt S7 ausgeführt wird, wird das Lagerbauteil in ein Bad mit einem Dewatering Fluid getaucht, um Wasserreste, die dem Bauteil nach Passieren der Heißspüle anhaften, zu entfernen. Die Verweildauer im Dewatering Fluid beträgt weniger als 1 Minute, um eine allzu große Abkühlung des Lagerbauteils zu vermeiden. Das Dewatering Fluid befindet sich auf Raumtemperatur und ist somit kalt.

Nach Schritt 8a wird Schritt 8b ausgeführt, bei dem das mit dem Dewatering Fluid benetzte Lagerbauteil in ein Bad mit einem hitzebeständigen Öl eingetaucht wird, so dass die Oberfläche des Lagerbauteils lückenlos mit dem hitzebeständigen Öl benetzt wird. Anstelle des hitzebeständigen Öls kann auch ein anderes flüssiges Schutzmedium zum Einsatz kommen, sofern es hitzebeständig ist und nicht zum Aufbrechen des Filmes neigt. Danach wird das Lagerbauteil aus dem Bad genommen und im sich anschließenden Schritt S9 dem Umluftofen zugeführt. Analog zur ersten Variante wird darauf geachtet, dass die Oberflächentemperatur des Lagerbauteils bis zum Einbringen in den Umluftofen nicht allzu stark, d. h. nicht unter 50 °C, vorzugsweise nicht unter 60° C absinkt. Das hitzebeständige Öl wird so ausgewählt, dass es bei der vorgesehen Haltetemperatur im Umluftofen beständig ist, d. h. sich während der Verweilzeit des Lagerbauteil im Umluftofen nicht zersetzt, einen geschlossenen Film beibehält und insbesondere keine Rückstände auf der Oberfläche des Lagerbauteils ausbildet. Für diesen Zweck eignen sich beispielsweise Abkochöle oder Abschreckemulsionen für Anlassöfen, insbesondere aber eine Zubereitung aus Syntheseölen mit Additiven mit Flammpunkt oberhalb der Haltetemperatur. Die Dichte kann etwa 0,93 g/cm³ und die kinematische Viskosität bei 40 °C nach DIN 51562 beispielsweise etwa 165mm²/s betragen, d. h. das hitzebeständige Öl ist relativ dickflüssig.

An Schritt S9 schließen sich noch die Schritte S10 und S11 an. Dann ist das erfindungsgemäße Verfahren abgeschlossen.

Bei einer Abwandlung der zweiten Variante des erfindungsgemäßen Verfahrens schließt sich Schritt S9 nicht unmittelbar an Schritt S8b an, so dass das Lagerbauteil beispielsweise auf Raumtemperatur abkühlt. Dies hat zwar zur Folge, dass bei der späteren Ausführung des Schritts S9 das Lagerbauteil erst wieder erwärmt werden muss und deshalb ein erhöhter Energieeinsatz erforderlich ist. Allerdings kann der Prozess dadurch flexibler gestaltet werden und die weiteren Schritte S9 bis S11 können beispielsweise zu einem späteren Zeitpunkt und/oder an anderen Ort ausgeführt werden. Da das Lagerbauteil in Schritt S8b mit dem hitzebeständigen Öl benetzt wird, besteht in der Zwischenzeit trotz der Abkühlung des Lagerbauteils kein nennenswertes Korrosionsrisiko.

## Patentansprüche

1. Verfahren zur Behandlung eines Lagerbauteils aus Stahl, wobei
- das Lagerbauteil einer Brünierbehandlung unterzogen wird,- das brünierte Lagerbauteil einer thermischen Nachbehandlung unterzogen wird, bei der es während einer Haltezeit bei einer Haltetemperatur gelagert wird,
- die Haltezeit wenigstens 30 Minuten beträgt,
**dadurch gekennzeichnet, dass** - die Haltetemperatur oberhalb von 150 °C liegt,
- das Lagerbauteil unmittelbar im Anschluss an die Brünierbehandlung bevor das Lagerbauteil auf eine Mindesttemperatur von 50 °C abgekühlt ist, mit einem flüssigen Schutzmedium, das bis zu einer Temperatur von wenigstens 200 °C beständig ist, benetzt wird und/oder der thermischen Nachbehandlung unterzogen wird.

2. Verfahren nach Anspruch 1, wobei als flüssiges Schutzmedium ein Öl oder eine Emulsion eingesetzt wird.

3. Verfahren nach einem der vorhergehenden Ansprüche, wobei das Lagerbauteil im mit dem flüssigen Schutzmedium benetzten Zustand der thermischen Nachbehandlung unterzogen wird.

4. Verfahren nach einem der vorhergehenden Ansprüche, wobei das Lagerbauteil vor dem Benetzen mit dem flüssigen Schutzmedium mit einem Dewatering Fluid behandelt wird.

5. Verfahren nach einem der Ansprüche 1 bis 3, wobei das Lagerbauteil zwischen der Brünierbehandlung und der thermischen Nachbehandlung bei einer Temperatur oberhalb der Mindesttemperatur getrocknet wird.

6. Verfahren nach einem der vorhergehenden Ansprüche, wobei das Lagerbauteil nach dem Benetzen mit dem flüssigen Schutzmedium und vor der thermischen Nachbehandlung auf eine Temperatur unterhalb der Mindesttemperatur abgekühlt wird.

7. Verfahren nach einem der vorhergehenden Ansprüche, wobei das Lagerbauteil zur Durchführung der thermischen Nachbehandlung einem Ofen zugeführt wird.

8. Verfahren nach Anspruch 1, wobei das Lagerbauteil zur Durchführung der thermischen Nachbehandlung in ein Temperierungsbad eingetaucht wird.

9. Verfahren nach Anspruch 8, wobei das Temperierungsbad mit einem Badmedium angesetzt wird, das Polyglykol oder Polyglykolether enthält.

10. Verfahren nach einem der Ansprüche 8 oder 9, wobei das Lagerbauteil vor dem Eintauchen in das Temperierungsbad in ein weiteres Bad eingetaucht wird, das ein dem Temperierungsbad entsprechendes Badmedium enthält.

11. Verfahren nach einem der Ansprüche 8 bis 10, wobei das Lagerbauteil vor dem Eintauchen in das weitere Bad oder in das Temperierungsbad mit einem Dewatering Fluid behandelt wird.

12. Verfahren nach einem der vorhergehenden Ansprüche, wobei das Lagerbauteil nach der thermischen Nachbehandlung mit einem Konservierungsmedium benetzt wird.

13. Verfahren nach Anspruch 12, wobei das Lagerbauteil mit dem Konservierungsmedium benetzt wird, bevor die Oberflächentemperatur des Lagerbauteils auf einen Wert unterhalb der Mindesttemperatur abgesunken ist.

14. Verfahren nach einem der vorhergehenden Ansprüche, wobei das Verfahren mittels einer kombinierten Brünier- Phosphatier-Anlage durchgeführt wird.

15. Verfahren nach einem der vorhergehenden Ansprüche, wobei es sich bei dem Lagerbauteil um einen Innenring, einen Außenring oder einen Wälzkörper eines Wälzlagers handelt.

## Claims

1. Process for treating a bearing component composed of steel, wherein
- the bearing component is subjected to a bluing treatment,
- the blued bearing component is subjected to a thermal after-treatment in which it is stored at a hold temperature for a hold time,
- the hold time is at least 30 minutes,
**characterized in that**
- the hold temperature is above 150°C,
- the bearing component is, immediately after the bluing treatment and before the bearing component has cooled to a minimum temperature of 50°C, wetted with a liquid protective medium which is stable up to a temperature of at least 200°C and/or is subjected to the thermal after-treatment.

2. Process according to Claim 1, wherein an oil or an emulsion is used as liquid protective medium.

3. Process according to either of the preceding claims, wherein the bearing component is subjected to the thermal after-treatment while wet with the liquid protective medium.

4. Process according to any of the preceding claims, wherein the bearing component is treated with a dewatering fluid before being wetted with the liquid protective medium.

5. Process according to any of Claims 1 to 3, wherein the bearing component is dried at a temperature above the minimum temperature between the bluing treatment and the thermal after-treatment.

6. Process according to any of the preceding claims, wherein the bearing component is cooled to a temperature below the minimum temperature after it has been wetted with the liquid protective medium and before the thermal after-treatment.

7. Process according to any of the preceding claims, wherein the bearing component is introduced into an oven for carrying out the thermal after-treatment.

8. Process according to Claim 1, wherein the bearing component is dipped into a heat treatment bath for carrying out the thermal after-treatment.

9. Process according to Claim 8, wherein the heat treatment bath is made up using a bath medium containing polyglycol or polyglycol ether.

10. Process according to either Claim 8 or 9, wherein the bearing component is dipped into a further bath containing a bath medium corresponding to the heat treatment bath before being dipped into the heat treatment bath.

11. Process according to any of Claims 8 to 10, wherein the bearing component is treated with a dewatering fluid before being dipped into the further bath or into the heat treatment bath.

12. Process according to any of the preceding claims, wherein the bearing component is wetted with a preservative after the thermal after-treatment.

13. Process according to Claim 12, wherein the bearing component is wetted with the preservative before the surface temperature of the bearing component has dropped to a value below the minimum temperature.

14. Process according to any of the preceding claims, wherein the process is carried out by means of a combined bluing-phosphating plant.

15. Process according to any of the preceding claims, wherein the bearing component is an inner ring, an outer ring or a roller body of a roller bearing.

## Revendications

1. Procédé de traitement d'un élément de palier en acier,
- l'élément de palier étant soumis à un traitement de brunissage,
- l'élément de palier bruni étant soumis à un post-traitement thermique dans lequel il est stocké pendant un temps de maintien à une température de maintien,
- le temps de maintien étant d'au moins 30 minutes,
**caractérisé en ce que**
- la température de maintien est supérieure à 150 °C,
- immédiatement après le traitement de brunissage, avant que l'élément de palier ne soit refroidi à une température minimale de 50 °C, l'élément de palier est humidifié avec un milieu protecteur liquide résistant jusqu'à une température d'au moins 200 °C et/ou est soumis au post-traitement thermique.

2. Procédé selon la revendication 1, une huile ou une émulsion est utilisée comme milieu protecteur liquide.

3. Procédé selon l'une des revendications précédentes, l'élément de palier étant soumis au post-traitement thermique à l'état humidifié avec le milieu protecteur liquide.

4. Procédé selon l'une des revendications précédentes, l'élément de palier étant traité avec un fluide de déshydratation avant d'être humidifié avec le milieu protecteur liquide.

5. Procédé selon l'une des revendications 1 à 3, l'élément de palier étant séché à une température supérieure à la température minimale entre le traitement de brunissage et le post-traitement thermique.

6. Procédé selon l'une des revendications précédentes, l'élément de palier étant refroidi à une température inférieure à la température minimale après humidification avec le milieu protecteur liquide et avant le post-traitement thermique.

7. Procédé selon l'une des revendications précédentes, l'élément de palier étant amené à un four pour effectuer le post-traitement thermique.

8. Procédé selon l'une des revendications précédentes, **caractérisé en ce que** l'élément de palier est immergé dans un bain de régulation de température pour effectuer le post-traitement thermique.

9. Procédé selon la revendication 8, un milieu de bain, qui contient du polyglycol ou du polyglycol éther, étant ajouté au bain de régulation de température.

10. Procédé selon l'une des revendications 8 ou 9, l'élément de palier étant immergé dans un autre bain, qui contient un milieu de bain correspondant au bain de régulation de température, avant d'être immergé dans le bain de régulation de température.

11. Procédé selon l'une des revendications 8 à 10, l'élément de palier étant traité avec un fluide de déshydratation avant d'être immergé dans l'autre bain ou dans le bain de régulation de température.

12. Procédé selon l'une des revendications précédentes, l'élément de palier étant humidifié avec un milieu de conservation après le post-traitement thermique.

13. Procédé selon la revendication 12, l'élément de palier étant humidifié avec le milieu de conservation avant que la température de surface de l'élément de palier ne soit descendue à une valeur inférieure à la température minimale.

14. Procédé selon l'une des revendications précédentes, le procédé étant mis en œuvre au moyen d'une installation combinée de brunissage et de phosphatation.

15. Procédé selon l'une des revendications précédentes, l'élément de palier étant une bague intérieure, une bague extérieure ou un élément roulant d'un palier à roulement.
